# EUROPÄISCHE PATENTANMELDUNG

(11) **EP 0 546 208 A1**
(43) Veröffentlichungstag der Anmeldung: **16.06.1993**
(21) Anmeldenummer: 91121219.9
(22) Anmeldetag: 11.12.1991
(51) Int. Cl.: A47J 37/12

(54) **Friteuse oder Fettbackgerät**

(71) Anmelder: MASCHINENFABRIK KURT NEUBAUER GmbH & Co., D-38286 Wolfenbüttel (DE)
(72) Erfinder: Täger, Lutz, Dipl.-Ing., W-3304 Wendeburg-Neubrück (DE); Scharnofske, Hartmut, Dipl.-Ing., W-3340 Wolfenbüttel (DE); Beinlich, Uwe, W-3340 Wolfenbüttel (DE)
(74) Vertreter: Einsel, Martin, Dipl.-Phys.

(57) **Zusammenfassung**

Eine Anordnung zum Backen oder Fritieren von Nahrungs- und Genußmitteln (Friteuse),
mit einem aus einer Wanne (1,1 a,1 b) herausnehmbaren Heizkörper (3,4),
zeichnet sich aus durch
einen Unterbrecher (5), der beim Herausnehmen des Heizkörpers (3,4) aus der Wanne (1) die Energiezufuhr zum Heizkörper (3,4) unterbricht, und der die unterbrochene Energiezufuhr erst dann zuschaltet, wenn der Heizkörper (3,4) wieder in die Wanne (1,1a,1b) eingesetzt ist.

## Beschreibung

Die Erfindung bezieht sich auf eine Anordnung zum Backen oder Fritieren von Nahrungs- und Genußmitteln. Eine solche Anordnung wird auch Friteuse oder Fettbackgerät genannt. Sie ermöglicht das Erhitzen von Fett in einer Wanne, die einen muldenförmigen Fettbehälter aufweist. In den muldenförmigen Fettbehälter ist der Heizstab eines Heizkörpers einsetzbar. Auch ist dieser Heizstab des Heizkörpers wieder aus dem muldenförmigen Fettbehälter vertikal entnehmbar.

Der Erfindung liegt die Aufgabe zugrunde, Friteusen nach dem Stand der Technik hinsichtlich ihrer Betriebssicherheit zu verbessern. Auch und gerade die genannte Betriebssicherheit wird bei einer Friteuse mit einem aus einer Wanne herausnehmbaren Heizkörper dann verbessert, wenn ein Unterbrecher vorgesehen wird, der beim Herausnehmen des Heizkörpers aus der Wanne die Energiezufuhr zum Heizkörper unterbricht. Wenn hingegen der Heizkörper wieder in die Wanne eingesetzt ist, schaltet der Unterbrecher die unterbrochene Energie wieder zu.

Neben der angestrebten Betriebssicherheit bringt die vorgenannte Erfindung weitere Vorteile. So erhöht sie auch die Lebensdauer einer erfindungsgemäßen Friteuse, da der Heizstab nunmehr nur noch dann eingeschaltet ist, wenn er auch tatsächlich in das Fett des muldenförmigen Fettbehälters eingesetzt ist. Heizstäbe, die außerhalb, an der freien Umgebungsluft beheizt werden, werden sehr schnell zerstört. Zwar wurde ein Dauerbetrieb in der Luft bisher durch Abschalten des Heizkörperstroms bei Erreichen der Schaltungstemperatur eines Thermostaten möglichst verhindert, aber das Versagen eines Thermostaten hatte entsprechende Konsequenzen und die Abschalttemperatur wird auch bei einwandfreier Funktion erst nach endlicher Zeit erreicht.

Ein weiterer Vorteil liegt in dem Personenschutz, der in manchen Ländern durch Vorschriften gesondert gefordert wird. So müssen beispielsweise in Deutschland, Heizkörper, die aus dem Fettbehälter entnehmbar sind, so geschaltet werden, daß sie außerhalb des Fettbehälters nicht betrieben werden können. Dies gewährt die erfindungsgemäße Lösung.

Auch ist die erfindungsgemäße Lösung von geradezu bestechendem geringen Aufwand, bei dem sie in bestehenden Friteusen noch nachgerüstet werden kann. Dies schafft die Möglichkeit, daß bereits im Handel befindliche und in tatsächlichem Betrieb stehende Friteusen noch an Vorschriften angepaßt werden können, die erst nach ihrem Verkauf in Kraft getreten sind. Die ob ihrer Aufwandsarmut bestechende Lösung findet durch die besonderen Ausgestaltungen der Unteransprüche 2 bis 10 vorteilhafte Weiterbildungen.

Während die Ansprüche 2 und 3 eine nähere Beschreibung der erfindungsgemäßen Friteuse, ihres doppelwinkelförmigen Heizstabs, ihres vertikal an der Rückwandung der Wanne beweglichen Heizkörpers und der Ausbildung der Wanne als Kombination aus muldenförmigem Fettbehälter und diesen aufnehmendem Behälterkorb betreffen, sind die weiteren Ansprüche auf die Gestaltungsmöglichkeiten der Steuerung der Energiezufuhr zum Heizstab des Heizkörpers gerichtet.

Die besondere Ausgestaltung des Anspruchs 4 betrifft den Einsatz eines Reed-Kontaktes, der magnetsensitiv ist. Er schaltet die Energiezufuhr des Heizstabes und wird über einen Magneten gesteuert, der vorzugsweise als Permanentmagnet ausgeführt ist, jedoch können auch Elektromagneten Anwendung finden.

Der Magnet und der Reed-Kontakt sind getrennt angeordnet. Jeweils einer der genannten Bauteile befindet sich an/in der Wanne, wohingegen sich der jeweils andere an/in dem Heizkörper befindet. Im eingesetzten Zustand des Heizkörpers, d.h. dann, wenn der Heizstab des aus Heizstab und Schaltgehäuse bestehenden Heizkörpers in den muldenförmigen Fettbehälter und das darin befindliche Fett eintaucht, sind der Magnet- und der Reed-Kontakt so benachbart, daß die Kraftlinien des Magneten den Reed-Kontakt schließen. Die geschaffene elektrische Verbindung läßt den Strom in den Heizstab fließen, womit dieser erwärmt wird. Die Nähe des Magneten zum Reed-Kontakt muß dabei nur insoweit gegeben sein, daß der Reed-Kontakt auslöst und ein bereits geringfügiges Anheben des Heizkörpers (Schaltkasten und Heizstab) den Reed-Kontakt abschalten läßt. Nur ein ordnungsgemäßer Sitz des Heizkörpers in der Wanne ermöglicht dann die Zuschaltung der elektrischen Energie zum Heizstab.

Der Reed-Kontakt kann einmal im oder am Schaltgehäuse angeordnet oder zum anderen auf Seiten der Wanne vorgesehen werden. Beide Varianten haben ihre Vorzüge.

So ist die Anbringung des Magneten regelmäßig die mechanisch einfachere. Der Reed-Kontakt muß die elektrische Energie schalten, was neben seiner mechanischen Befestigung auch die elektrischen Verbindungen erfordert, weshalb seine Anbringung regelmäßig größeren Aufwand bringt, als die Anbringung des Magneten. Der Reed-Kontakt kann im Schaltgehäuse oder an dem Schaltgehäuse in einem separaten nichtmagnetisierbaren, vorzugsweise aus Chrom-Nickel-Strahl bestehenden Gehäuse angeordnet sein. Die Zufuhr mittels des Energiezufuhrkabels kann dabei von der Steckdose direkt in das Schaltgehäuse des Heizkörpers erfolgen. Eine unmittelbare Schaltung des Heizstroms ist allerdings erschwert, da entsprechend leistungsfähige Reed-Kontakte sehr aufwendig sind; es wird daher eine mittelbare Schaltung bevorzugt.

Wird der Reed-Kontakt auf Seiten der Wanne angeordnet, so ist die Energiezufuhr mittels des Energiezufuhrkabels zunächst zur Wanne und hier durch seine Rück- oder Seitenwand zu führen. Nach Verbindung mit dem Reed- Kontakt kann die Energiezufuhr aus der Wanne über ein Zwischenkabel in den Schaltkasten des Heizkörpers geführt werden. Dies ermöglicht die Anbringung eines zusätzlichen Schalters in einer Seiten- oder Rückwand der Wanne, mit der jedenfalls die Energiezufuhr vollständig unterbrochen werden kann.

Auch kann vorteilhaft eine mechanische Verrückung des Magneten erfolgen - sei es auf Seiten der Wanne oder auf Seiten des Schaltgehäuses - mit der jedenfalls der Abstand des Magneten von dem Reed-Kontakt so vergrößert oder verändert wird, daß der Reed-Kontakt auch bei eingesetztem Heizkörper offen bleibt. Diese mechanische Verrükkung zeigt besondere Vorteile aufgrund ihrer Betriebssicherheit. Sie benötigt keine mechanischen Schalter, die verschmutzen oder verfetten können und dann Kontaktprobleme aufwerfen.

Überhaupt ist eine magnetische Kopplung zwischen dem Reed-Kontakt und dem Magneten im eingesetzten Zustand des Heizkörpers von großen Vorteil bei Friteusen. Es sind keine zusätzlichen Öffnungen erforderlich, in die irgendwelche Zapfen oder Schaltgestänge eingreifen müssen, um mechanische Schalter zu betätigen. Auch können die sonst üblichen mechanisch bewegten Teile vermieden werden. Elektrische Schalter können dann zur Gänze entfallen, wenn die mechanische Verrükkungsvariante gemäß Anspruch 10 eingesetzt wird. Seine denkbaren Varianten (mit optischen Kopplungen und Näherungsschaltern) weisen gegenüber der magnetischen Kopplung erhebliche Nachteile auf. So können optische Lichtschrankensysteme viel zu einfach verschmutzen. Der harte, durch spritzendes und heißes Fett erschwerte Betriebsalltag der Geräte führt bei Lichtschranken, seien es Reflex- oder Durchlichtschranken schneller zu Betriebsstörungen. Die auch denkbaren Näherungsschalter würden unabhängig vom harten Betriebsalltag durch im Betrieb erforderliche Eisenwaren, wie Bestecke, irritiert werden. Die Irritationen könnten zu Betriebsstörungen führen, da das Gerät im Grunde funktionsfähig wäre, es jedoch gerade aufgrund einer in der Nähe eines Näherungsschalters liegenden Gabel funktionsunfähig erscheint.

Geeignet in der rauhen fettreichen Umgebung wäre zusätzlich zu der magnetischen Kopplung mittels Magnet und Reed-Kontakt ein kontaktlos schaltendes Bauelement, wie Triac oder Thyristor, welches den Strom zum Heizstab ein- und ausschaltet. In Versuchen hat sich jedoch auch der Einsatz eines Schützes bewährt.

Da der Reed-Kontakt sowohl gasdicht, als auch fettdicht ist, werden seine schaltenden Kontaktfahnen im Glasgehäuse weder durch tropfendes noch spritzendes Fett in Mitleidenschaft gezogen. Der Reed-Kontakt schaltet lediglich den Steuerstrom für das Halbleiter- Schaltelement, ggf. über einen Ohmschen oder kapazitiven Vorwiderstand, dem Steueranschluß zu. Die Lastanschlüsse des Schaltelements steuern dann den Heizstrom zum Heizstab. Der Vorteil liegt in einer weiteren Erhöhung der Betriebssicherheit und der Standfestigkeit der in rauher Umgebung betriebenen Friteuse.

Vorteilhaft wird die Friteuse schließlich aus nichtmagnetisierbarem Edelstahl ausgeführt, so daß keinerlei Korrosions- oder Rostprobleme auftreten und die magnetischen Kraftlinien des Magneten frei durch vorgesehene Wandungsteile hindurchtreten können.

Der erläuterte Heizstab, der Teil des Heizkörpers ist, kann auch in mehreren Teilen ausgeführt sein, so daß ein Beheizungssatz gebildet wird, der mit dem Schaltgehäuse verbunden wird und als Heizkörper in die Wanne einsetzbar und herausnehmbar ist. Daß hierbei selbstverständlich nur der wesentliche Teil des Heizstabes oder des Beheizungssatzes in den muldenförmigen Fettbehälter eingesetzt wird, wohingegen der Schaltkasten außerhalb der Wanne befindlich ist, versteht sich für funktionsfähige Friteusen von selbst.

Ein Ausführungsbeispiel der Erfindung zeigen die Fig. 1 bis 3. Dabei zeigt:
Fig. 1 eine Wanne mit aufgesetztem Heizkörper, wobei der Heizstab in den muldenförmigen Fettbehälter eingetaucht ist und der Schaltkasten des Heizkörpers an der Rückwand der Wanne zu liegen kommt. Dies ist der eingesetzte Zustand.
Fig. 2 zeigt dieselbe Wanne mit demselben Heizkörper, allerdings ist hierbei der Heizkörper mit seinem Heizstab aus der Wanne herausgenommen.
Fig. 3 zeigt zwei elektrische Schaltdiagramme, die in den Heizkörpern/Wannen gemäß den Fig. 1 und 2 vorgesehen sein können.

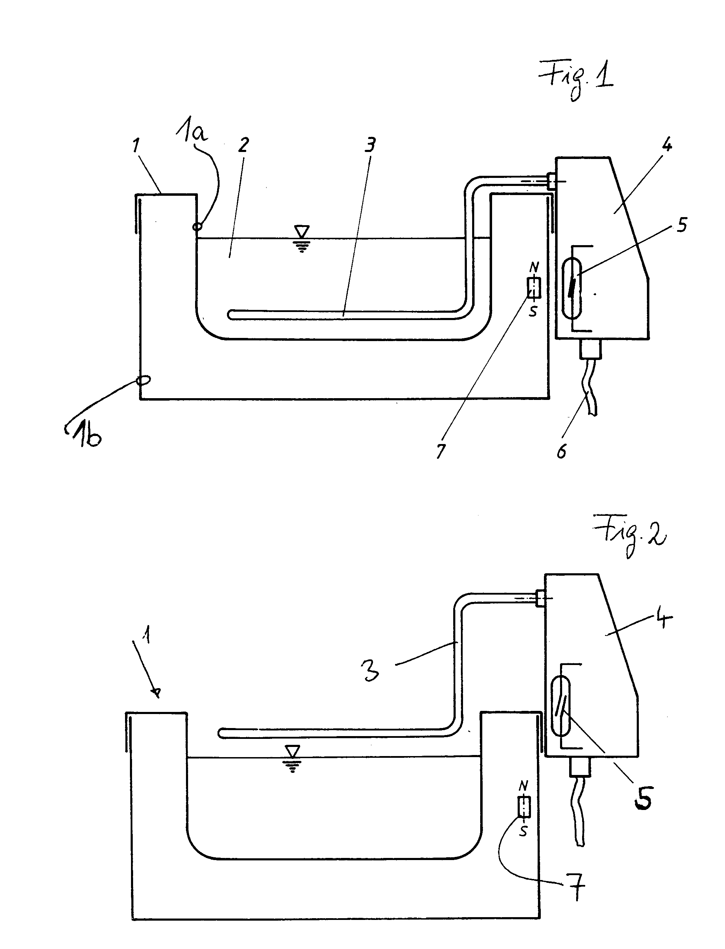

Im einzelnen zeigt Fig. 1 einen als Trog ausgestalteten muldenförmigen Fettbehälter 1a, der in einen Behälterkorb 1 eingesetzt ist. Der Behälterkorb 1 b weist vier Wandungen auf, die den Fettbehälter 1 seitlich umfassen. In den Fettbehälter wird das Fett gefüllt, das erhitzt werden soll. Dabei kann die Größe des Fettbehälters geringfügig kleiner sein, als es die Abmessungen der Wandungen des Behälterkorbes sind. So verbleibt ein um den Fettbehälter verlaufender im wesentlichen horizontaler Kragen.

Die aus Fettbehälter 1 und Behälterkorb 1 b gebildete Wanne 1 ist selbständig stehend und wird zur Erhitzung des Fettes mit einem Heizkörper 3,4 mechanisch gekoppelt. Der Heizkörper 3,4 weist dabei ein rückwärtig an der Wanne 1 frei aufwärts und abwärts bewegliches Schaltgehäuse 4 und einen doppelwinkelförmigen Heizstab 3 auf. An der Wanne 1 kann eine Halterung vorgesehen sein, die es erlaubt, den Heizkörper, d.h. den Schaltkasten 4, sowohl in herausgehobener, wie auch in eingesetzter Lage zu fixieren. Oberhalb des Kragens der Wanne 1 entspringt dem Schaltkasten 4 der Heizstab 3, der sich im eingesetzten Zustand des Heizkörpers 3,4 an die Gestaltung der Wanne 1 angleicht. Zunächst verläuft der Heizstab parallel zum Kragen, senkt sich sodann abwärts, im wesentlichen parallel zu den Wandungen der Fettmulde 1 a, um dann an deren Boden wiederum abzuknicken und parallel zum Bodenteil des Fettbehälters zu verlaufen. Der Heizstab 3 kann einstückig ausgeführt, d.h. mit Zuleitung und Rückleitung, er kann jedoch auch als Beheizungssatz gebildet sein, der mehrere Zu- und Rückleitungen aufweist.

Dem Schaltgehäuese 4 ist ein Stromkabel 6 zugeordnet, das an der Unterseite durch eine Öffnung eingeführt ist. Dem Stromkabel 6 ist ein Reed-Kontakt 5 nachgeschaltet, ihm folgt elektrisch gesehen der Heizstab 3. Die Rückleitung des Heizstabes 3 führt wiederum zum Stromkabel 6.

Im eingesetzten Zustand, wie Fig. 1 auch darstellt, ist dem im Schaltkasten 4 angeordneten Reed-Kontakt oder Reed-Schalter ein Permanentmagnet 7 gegenübergestellt. Beide weisen im wesentlichen die gleiche Befestigungshöhe auf, so daß der Magnet 7 den Reed-Schalter 5 zum Schließen bringt. Die Stromzufuhr zum Heizstab 3 ist eingeschaltet.

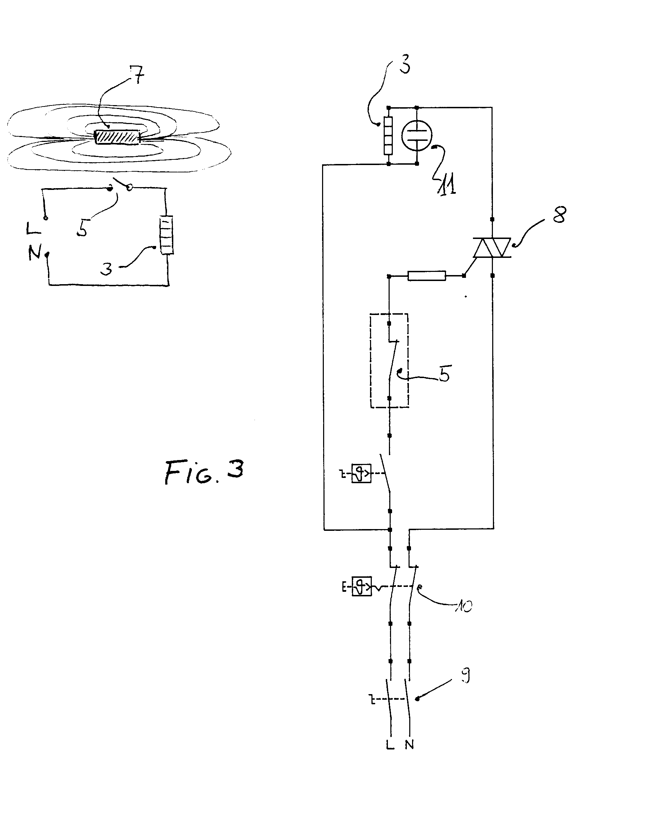

Wird - wie Fig. 2 erläutert, der Heizkörper 3,4 aus der Wanne 1 herausgehoben, so entfernt sich der Reed-Schalter 5 vom Magneten 7. Damit öffnet der Reed-Schalter 5, womit die Stromzufuhr und damit der Heizstab 3 abgeschaltet ist. Eine hier dargestellte, aber nicht erforderliche Halterung ermöglicht die Fixierung des Schaltkastens 4 mit seinem Heizstab 3 in dem gezeigten angehobenen Zustand.

Da nunmehr der Reed-Kontakt geöffnet ist, kann der Heizstab an der Umgebungsluft nicht verbrennen, selbst wenn eine evtl.vorgesehene Temperaturregel- und -begrenzungseinrichtung ausfallen würde. Auch kann er nicht aufglühen, so daß Betriebssicherheit und Personenschutz gegeben sind.

Das Absenken des Heizkörpers 3,4 in die Wanne 1 führt zum automatischen Wieder-Einschalten der Stromzufuhr. Die Erwärmung des Fettes ist somit bedienungsfehlerfrei an das Einsetzen des Heizkörpers 3,4, bzw. an das Absenken des Schaltkastens 4 in seine Betriebsstellung, gekoppelt. Der Magnet 7 oder der Reed-Schalter 5 sind dabei in ihrer Bauhöhe so angeordnet, daß die Stromzufuhr erst dann erfolgt, wenn der Heizstab 3 im wesentlichen in das Fett eingetaucht ist. Damit wird einerseits beim Herausnehmen ein frühes Abschalten und andererseits ein spätes, erst im ordnungsgemäßenb Betriebszustand erfolgendes Zuschalten der elektrischen Energie gewährleistet.

Der Magnet 7 kann mit einer - nicht dargestellten - Verschiebe- oder Verrückungseinrichtung versehen sein, die ihn von dem Reed-Kontakt 5 mechanisch entfernt. Hierdurch stoppt die Energiezufuhr in jedem Fall, auch ein Einsetzen des Heizstabes in das Fett und das Absenken des Schaltkastens 4 führt nicht zu einer Erhitzung des Fettbades 2. Dies ist der ausgeschaltete oder Ruhezustand. Die mechanische Verrückungsvariante zeichnet sich besonders durch hohe Standfestigkeit, d.h. Langlebigkeit aus, da keine zusätzlichen mechanischen und durch Fettberührung in ihrem Kontaktverhalten beeinflußbare Schalter vorgesehen sein müssen.

Die Wanne 1 mit ihrem Trog 1 und dem Behälterkorb 1 b kann ebenso wie das Schaltgehäuse 4 aus nichtrostendem Stahl ausgeführt sein. Hinzu kann treten, daß ein nichtmagnetisierbarer Stahl Verwendung findet, so daß die gekoppelten Elemente - Reed-Schalter 5 und Magnet 7 - beide in je einem Gehäuse angebracht sein können. Dies läßt sie zusätzlich geschützt sein, was bei einer rauhen Arbeitsbedingung von Friteusen regelmäßig erwünscht sein wird. Eine solche gehäuseinterne Anbringung ist aber nicht zwingend erforderlich, die genannten Bauteile können auch seitlich oder unterhalb der Gehäuse 4 und 1 angeordnet sein, dies ist anwendungsabhängig zu entscheiden.

Fig. 3 zeigt schließlich eine elektrische Darstellung des Schaltkreises, wie er in den Friteusen gemäß Fig. 1 und Fig. 2 im Schaltkasten 4 angeordnet sein kann. Dabei wird die Energiezufuhr einmal (im linken Halbbild) unmittelbar über den Reed-Schalter 5 zum Heizstab 3 geführt. Ein Annähern des (schematisch dargestellten) Magneten 7 führt zum Schließen des Reed-Schalters 5, der die Stromzufuhr an den Heizstab 3 freigibt. Ein Entfernen des Magneten 7 von dem Reed-Schalter 5 läßt die Stromzufuhr unterbrechen.

Das rechte Halbbild der Fig. 3 zeigt eine alternative Variante, die eine höhere Lebensdauer des Reed-Schalters 5 ermöglicht. Er schaltet über einen Vorwiderstand R1 den Steueranschluß eines Triacs 8, der seinerseits mit Anode und Katode den Laststromkreis schaltet, in dem der Heizstab 3 angeordnet ist. Eine solche Variante läßt den Schaltstrom über den Reed-Kontakt 5, der in der Regel relativ klein ist, auf solche Werte absinken, daß seine Lebenszeit sprunghaft ansteigt. Der Triac 8 hat eine nahezu unbegrenzte Lebensdauer, da er funkenfrei schaltet und daher seinen Durchgangswiderstand lebenszeitunabhängig beibehält. An ihn geratendes Fett wirkt sich somit nicht lebensdauerverkürzend aus, wie dies bei einem mechanischen Schalter der Fall wäre.

Nicht dargestellt ist ein noch hinzufügbares Widerstands/Kapazitäts-Netzwerk, was dem Triac 8 parallelzuschalten wäre, so daß im Abschaltaugenblick keine Überspannungen entstehen. Dieses hat jedoch nur schützende Funktion und ist für den einwandfreien Betrieb nicht zwingend erforderlich. Weiter zeigt das rechte Halbbild der Figur 3 den Eingreifort der Thermoschalter, einmal im STeuerkreis des Triac-s 8, einmal im Laststromkreis über einen Temperaturbegrenzer 10. Ein zusätzlicher Hauptschalter 9 kann vorgesehen sein, auch kann dem Heizstab 3 eine Kontrollanzeige 11 parallelgeschaltet werden.

## Patentansprüche

1. Anordnung zum Backen oder Fritieren von Nahrungs- und Genußmitteln (Friteuse),
mit einem aus einer Wanne (1,1a,1b) herausnehmbaren Heizkörper (3,4),
gekennzeichnet durch
einen Unterbrecher (5), der beim Herausnehmen des Heizkörpers (3,4) aus der Wanne (1) die Energiezufuhr zum Heizkörper (3,4) unterbricht, und der die unterbrochene Energiezufuhr erst dann zuschaltet, wenn der Heizkörper (3,4) wieder in die Wanne (1,1a,1b) eingesetzt ist.

2. Anordnung nach Anspruch 1,
dadurch gekennzeichnet,
daß der Heizkörper (3,4) einen doppelwinkelförmigen Heizstab (3) und ein Schaltgehäuse (4) aufweist, welches an der Rückwandung der Wanne (1,1 a,1 b) vertikal beweglich ist,
wobei das Schaltgehäuse (4) an seiner vorderen Wandung mindestens eine Auslaßöffnung oberhalb der Wanne (1,1a,1b) aufweist, durch welche der doppelwinkelförmige Heizstab (3) ein- und austritt und
daß die Wanne (1) einen muldenförmigen Fettbehälter (1 a) sowie eine diesen mit Außenwandungen umfassenden und tragenden Behälterkorb (1 b) aufweist.

3. Anordnung nach Anspruch 2,
dadurch gekennzeichnet,
daß der doppelwinkelförmige Heizstab (3) eine Gestaltung aufweist, die der Form der Wanne (1,1a,1b) näherungsweise entspricht und
daß der so gestaltete Heizstab (3) sich bei Einsetzen des Heizkörpers (3,4) in die Wanne (1) durch Absenken des rückwärtigen Schaltgehäuses (4) an die Wannenform (1) insbesondere den muldenförmigen Fettbehälter (1a), anschmiegt.

4. Anordnung nach einem der Ansprüche 1 bis 3, dadurch gekennzeichnet,
daß die Energiezufuhr zum Heizstab (3) des Heizkörpers (3,4) mittels eines magnetsensitiven Reed-Kontaktes (5) ein- und abgeschaltet wird und
daß der Reed-Kontakt (5) im eingesetzten Zustand des Heizkörpers (3,4) einem Magneten (7), insbesondere einem Permanentmagneten, insoweit benachbart ist, daß die Energiezufuhr des Heizstabes (3) erst dann zugeschaltet wird, wenn der Heizkörper (3,4) vollständig oder nahezu vollständig abgesenkt ist.

5. Anordnung nach Anspruch 4,
dadurch gekennzeichnet,
daß der Reed-Kontakt (5) auf Seiten des Schaltgehäuses (4) angeordnet ist, vorzugsweise im Schaltgehäuseinnern oder seitlich neben bzw. unterhalb des Schaltgehäuses (4),
daß der mit dem Reed-Kontakt (5) korrespondierende Magnet (7) auf seiten der Wanne (1), insbesondere nahe der rückwärtigen Wandung des Behälterkorbes (1 b) angebracht ist,
wobei der Reed-Kontakt (3) und der Magnet (7) bei eingesetzten Heizkörper (3,4) im wesentlichen gleichhoch zu liegen kommen.

6. Anordnung nach Anspruch 4,
dadurch gekennzeichnet,
daß der Reed-Kontakt (5) auf Seiten der Wanne (1,1a,1b) angeordnet ist, vorzugsweise im Innern des Behälterkorbes (1 b) zwischen Rückwandung des muldenförmigen Fettbehälters (1 a) und Rückwandung des Behälterkorbes (1 b), und
daß der mit dem Reed-Kontakt (5) korrespondierende Magnet (7) auf seiten des Schaltgehäuses (4) angeordnet ist, vorzugsweise in seinem Gehäuseinnern oder außerhalb des Schaltgehäuses (4) jedoch diesem eng benachbart.

7. Anordnung nach Anspruch 5 oder 6,
dadurch gekennzeichnet,
daß ein Energiezuführkabel (6) dem Schaltgehäuse (4) entweder unmittelbar (Anspruch 6) oder über die Wanne (1,1a,1b) mittelbar (Anspruch 5) zugeführt ist.

8. Anordnung nach einem der vorherstehenden Ansprüche,
dadurch gekennzeichnet,
daß ein Triac- oder ein Thyristorelement (8) vorgesehen ist, dessen Steueranschluß über den Reed-Kontakt (5) und einen Vorwiderstand (R 1) beim Einsetzen des Heizkörpers (3,4) in die Wanne (1) angesteuert wird und
dessen Lastanschlüsse dem Heizstab (4) des Heizkörpers (3,4) kontaktlos Strom zuführen und diesen abschalten.

9. Anordnung nach einem der vorherstehenden Ansprüche,
dadurch gekennzeichnet,
daß die Wanne (1,1a,1b) und das Schaltgehäuse (4) aus nichtmagnetisierbarem Edelstahl, vorzugsweise austenitischer Chrom-Nickel-Stahl,
ausgeführt ist.

10. Anordnung nach einem der vorherstehenden Ansprüche,
dadurch gekennzeichnet,
daß eine mechanische Verrückung für den Magneten (7) vorgesehen ist, die ihn so weit vom Reed-Kontakt (5) entfernt, daß die Energiezufuhr zum Heizstab (3) auch dann unterbrochen bleibt, wenn der Heizkörper (3,4) in die Wanne (1,1a,1b) eingesetzt ist.
